# EUROPÄISCHE PATENTSCHRIFT

(11) **EP 1 731 682 B1**
(45) Veröffentlichungstag und Bekanntmachung des Hinweises auf die Patenterteilung: **27.08.2008**
(21) Anmeldenummer: 06009349.9
(22) Anmeldetag: 05.05.2006
(51) Int. Cl.: E03F 3/02, E03F 1/00

(54) **Kaskaden-Kanalsystem für Oberflächenwasseranlagen**
Cascade sewer system for surface water
Système de canalisation à cascade pour eaux de surface

(30) Priorität: 06.06.2005 DE 102005025923
(43) Veröffentlichungstag der Anmeldung: 13.12.2006
(73) Patentinhaber: Maier, Krischan, 93426 Roding (DE)
(72) Erfinder: Maier, Krischan, 93426 Roding (DE)
(74) Vertreter: Beetz & Partner

(56) Entgegenhaltungen:
- WO-A-00/40811
- US-A- 2 012 495

## Beschreibung

Die Erfindung betrifft ein Kanalsystem, das auf eine einfache und kostengünstige Weise bei einem Anfall von großen Mengen an Oberflächenwasser eine sehr große Volumenerweiterung und dadurch eine starke Verringerung der Fließgeschwindigkeit des ablaufenden Oberflächenwassers ermöglicht. Hierzu ist zumindest ein Schacht vorgesehen, der ein Aufstauen von Wasser in einer Kanalhaltung stromauf des Schachts erlaubt, wobei in der Kanalhaltung eine Rohrleitung verlegt ist, die ein Austreten von Wasser erlaubt.

In der DE 38 07 367 A1 ist beispielsweise ein Verfahren und eine Einrichtung zur Aktivierung vorhandener Stauräume in Abwassersystemen der Siedlungswirtschaft beschrieben. Hierbei ist ein Schacht vorgesehen, der das in dem Schacht befindliche Wasser an aufnahmefähige Bodenschichten außerhalb des Schachts abgibt, so dass dieses Wasser dort versickern kann. Bedingt durch die geringe Versickerungsgeschwindigkeit ermöglicht dieses System jedoch nur einen beschränkten und relativ langsamen Volumenzuwachs und ist zudem nur bei nicht bindigen Böden realisierbar, da sonst kein Versickern in aufnahmefähigen Schichten möglich ist.

Die DE 299 06 068 U1 betrifft eine Kanalisationsanlage zur Gebietsentwässerung nach dem Trennverfahren, wobei der Regenwasserkanal als begehbarer Kanal mit einem Wartungsgang ausgebildet ist und der Schmutzwasserkanal innerhalb des Regenwasserkanals vorgesehen ist. Der Regenwasserkanal übernimmt hiermit zugleich die Funktion eines Stauraumkanals. Hierbei sind Kanäle mit sehr großem Durchmesser erforderlich, so dass die Verlegekosten und die Materialkosten erheblich sein können.

Bei Baugebietserschließungen und auch bei Baugebietssanierungen muss häufig ein erhöhter Regenwasser- bzw. Oberflächenwasseranfalls berücksichtigt werden. Insbesondere ist dies notwendig, wenn zunehmende Bodenversiegelungen einen erhöhten Oberflächenwassereintrag in die Kanalisation ergeben. Hierbei ist der Einsatz von Retentionsteichen bekannt, in die Oberflächenwasser strömen kann, wenn es zu hohen Niederschlägen kommt. Derartige Retentionsteiche haben jedoch den Nachteil, dass sie eine relativ große Fläche benötigen und zudem in dicht bebauten Gebieten zu Problemen der Absicherung führen. Weiterhin sind Regenrückhaltebecken und Stauraumkanäle bekannt, die jedoch aufgrund ihrer teilweisen unterirdischen Anordnung zu relativ hohen Kosten führen.

Die WO-A-0040811 betrifft ein gattungsgemäßer Kanalsystem, das eine wasserdichte Wanne aufweist, in das in die Wasserleitung einfließendes Wasser, das das vorhandene Zwischenspeichervermögen der Wasserleitung übersteigt, einströmen kann. Weiterhin ist ein Drosselschacht mit einer Drossel vorgesehen, wobei der Drosselschacht einen Überlauf aufweist, der unterhalb der Oberkante der wasserdichten Wanne endet.

Es ist eine Aufgabe der Erfindung, ein Kanalsystem zu realisieren, das auf eine einfache und kostengünstige Weise bei einem Anfall von großen Mengen an Oberflächenwasser eine große Volumenerweiterung ermöglicht und dadurch eine starke Verringerung der Fließgeschwindigkeit des ablaufenden Oberflächenwassers erzielt.

Die Aufgabe wird gemäß den Merkmalen des unabhängigen Patentanspruchs 1 gelöst. Die abhängigen Patentansprüche zeigen vorteilhafte Ausführungsformen und Weiterentwicklungen der Erfindung auf.

In dem Schacht kann ein Hohlraum vorgesehen sein, wobei stromauf des Hohlraums in einer sich stromauf des Schachts befindlichen Kanalhaltung, in der die Rohrleitung angeordnet ist, das im Wesentlichen wasserundurchlässiges Trennmaterial vorgesehen ist, das im Wesentlichen quer zur Ablaufrichtung bzw. Strömungsrichtung des Wassers angeordnet ist. Das Trennmaterial kann hierbei in etwa die Höhe des Überlaufs haben.

Weiterhin kann der Kanalabschnitt ein in Längsrichtung angeordnetes seitliches Abdichtmaterial aufweisen, das im Wesentlichen wasserundurchlässig sein kann, wobei das Abdichtmaterial und das Trennmaterial zueinander abgedichtetausgebildet sein können. Das seitliche Abdichtmaterial kann nur in Teilbereichen der Kanalhaltung vorgesehen sein. Befinden sich etwa entlang des Kanalsystems grössere unbebaute Flachen, die so kann eventuell teilweise auf das Abdichtmaterial verzichtet werden. Das Gleiche kann etwa für stark bindige Böden gelten, die ein unerwünschtes Ablaufen des sich in der Kanalhaltung befindlichen Wasser, aus den Seitenbereichen der Kanalhaltung in das umgebende Erdreich hinein, verhindern.

Bei einem Anfall von nur einer geringen Menge von Oberflächenwasser strömt dieses durch die Rohrleitung in den Schacht und durch die Drossel in die nächste Rohrleitung. Aufgrund des nur geringen Wasservolumenstroms führt die Drossel nicht zu einem Aufstauen des abfließenden Wassers. Ist jedoch der Oberflächenwassereintrag größer, so kann die Drossel zu einem Aufstauen des Oberflächenwassers in dem Schacht führen. Der Aufstauvorgang kann zu einem Ansteigen des Wasserspiegels in dem Hohlraum führen.

Bei einem hohen Wasservolumenstrom wird folglich in dem Schacht eine Wassersäule erzeugt, die aufgrund des Prinzips der kommunizierenden Röhren in der Kanalhaltung stromauf des Schachts zu einem Anstieg des Wasserstands führt. Die Kanalhaltung stromauf des Schachts kann aufgrund der längs- und stirnseitigen Abdichtungen (bspw. durch die vorgenanten Maßnahmen) als Wassersammelvolumen dienen. Bei einem Ansteigen des Wasserspiegels strömt das Wasser durch die Öffnungen der Rohrleitung und steigt in der - Kanalhaltung stromauf des Schachts bis zum Erreichen der Höhe des Überlaufs in dem Schacht an. Da das in der Kanalhaltung ebenfalls angeordnete Trennmaterial eine Höhe aufweist, die im Wesentlich zu der des Überlaufs gleich ist, kann das Trennmaterial zusätzlich als Überlauf der Kanalhaltung dienen, wobei das Wasser bei Erreichen der Höhe des Trennmaterials über das Trennmaterial hinweg und seitlich um den Schacht herum in die nächste Kanalhaltung stromab des Schachts einströmt. Dadurch kann ein zusätzlicher Sicherheitsgewinn bei einem starken Wasseranfall erzielt werden. Wenn der Wasserstand die Höhe des Überlaufs erreicht hat, strömt es von dort in die Rohrleitung stromab der Drossel.

Dadurch kann eine sehr große Volumenerweiterung in der Kanalhaltung erzielt werden. Diese Volumenerweiterung führt zu einer extremen Verringerung der Fließgeschwindigkeit bei großen Niederschlagsintensitäten.

Da der Kanalabschnitt seitlich in Längsrichtung ein Abdichtmaterial aufweist, kann das Wasser in der Kanalhaltung sicher gehalten werden.

Da weiterhin ein im wesentlichen wasserundurchlässiges Trennmaterial vorgesehen ist, das mit dem Abdichtmaterial im Wesentlichen wasserdicht abschließt, kann zudem auch ein Abfließen des aufgestauten Wassers in eine stromabwärtige Richtung verhindert werden.

Zudem kann beispielsweise ein in die Kanalhaltung eingebrachtes Füllmaterial aufgrund der hohen Oberfläche desselben zu einem gedämpften Einlaufen des aufgestauten Wassers in das freie Volumen, welches in der Kanalhaltung gebildet ist, führen. Ein plötzliches Einschießen des Wassers verbunden mit unerwünschten Kavitations- und Umspül- bzw. Abtragseffekten kann dadurch verhindert werden.

Durch ein Zusammenschalten von mehreren Kanalhaltungen mit jeweils dazwischenliegenden Schächten kann ein kaskadiertes bzw. ein Kaskaden-Kanalsystem für Oberflächenwasseranlagen erzielt werden, das mit nur geringen Kosten eine über die gesamte Länge des Kanalsystems erzielbare sehr große Volumenerweiterung bei einer starken Verringerung der Fließgeschwindigkeit erzielt. Dadurch kann Hochwasserkatastrophen sehr wirksam entgegengewirkt werden und es ist zudem möglich, ökologische Bausünden zu reduzieren. Das erfindungsgemäße System kann nicht nur bei Baugebietserschließungen eingesetzt werden, sondern es sind auch Bausanierungen möglich, da schon bei bestehenden Kanälen eine Nachrüstung des Kanalsystems möglich ist.

Die kaskadierte Füllung der freien Volumina der Kanalhaltungen ermöglicht zudem eine stufenweise Füllung und damit eine hochwirksame Zurückhaltung des mit großen Volumenströmen anfallenden Oberflächenwassers, so dass Wasserabflussgebiete stromab des Kanalsystems hochgradig sicher vor starken und schnellen Wassereinträgen sind.

Der Einsatz des erfindungsgemäßen Kanalsystems kann insbesondere bei bindigen Böden von Vorteil sein, welche ein einfaches Versickern über ein Rigolensystem nicht ermöglichen. Infolgedessen ist bei derartiger Bodenbeschaffenheiten ein Abdichtmaterial am Boden der Kanalhaltung nicht notwendig, da ein Versickern ohnehin nur in geringem Umfang möglich ist.

Nachdem der Oberflächenwasseranfall sich wieder reduziert hat, läuft das in dem freien Volumen der Kanalhaltung befindliche Wasser wieder durch die Öffnungen der Rohrleitung gedrosselt durch die jeweiligen Drosseln ab. Der maximale Volumenstrom wird hierbei durch die Drossel vorgegeben. Dadurch kann sichergestellt werden, dass im geregelten Betrieb zu keiner Zeit ein zu hoher Volumenstrom des abfließenden Wassers erzielt wird.

Das in Längsrichtung am Kanalabschnitt seitlich angeordnete Abdichtmaterial kann beispielsweise eine Folie bspw. aus Kunststoff sein.

Das Füllmaterial in dem Kanalabschnitt kann beispielsweise Schotter sein, wobei um die Rohrleitung herum Kies gewählt werden kann.

Die Trennwand in dem Schacht kann als Beton- und/oder Stahlscheibe ausgebildet sein. Es ist jedoch auch möglich, die Trennwand aus mehreren zusammensteckbaren Elementen auszubilden. Hierbei ist es dann in einfacher Weise möglich, die Höhe der Trennwand und somit die Höhe des Überlaufs von außen durch einfaches Herausnehmen der Elemente einzustellen. Natürlich können die einzelnen Elemente auch unterschiedliche Höhen aufweisen, so dass eine sehr genaue Justierung der Stauhöhe möglich ist. Derartige Dammbalken können zudem auch Öffnungen aufweisen, die ein gleichmäßigeres Ablaufen des aufgestauten Wassers ermöglichen. Diese Öffnungen könnten beispielsweise auch durch Griffmulden realisiert werden, die jeweils am Boden der Dammbalken vorgesehen sind.

Die in dem Schacht verwendete Drossel kann als Steckschieber ausgebildet sein. Hierbei könnte der Steckschieber durch ein weiteres Herunterschieben die freie Drosselfläche verringern, wobei ein Heraufziehen die freie Drosselfläche vergrößert. Natürlich kann die Drosselöffnung unterschiedliche Flächenausbildungen aufweisen. Denkbar sind hierbei rotationssymmetrische Formen, viereckige Formen oder andere Formen, die strömungsmechanisch zu der gewünschten Drosselung führen, stromab der Drossel nicht zu einem übergrossen Abtrag der Materialien führt und zudem unempfindlich gegen ein Zusetzen durch Dreck, Schmutz usw. sind. Der Steckschieber kann auch einfach eine Platte sein, die nach oben oder unten geschoben wird, um die freie Strömungsfläche einzustellen. Dadurch ist eine sehr genaue Einjustierung des Kanalsystems möglich, so dass auf die gegebenen Topologien, Baumaterialien und sonstigen Gegebenheiten sehr genau eingegangen werden kann. Anstatt eines Steckschiebers können auch andere Arten von Ventilen zum Einsatz kommen, bspw. Drehschieber- oder Kugelventile.

Das erfindungsgemäße System kann kostenaufwändige Regenrückhaltebecken, Stauraumkanäle und Retentionsteiche auf eine einfache und kostengünstige Weise ersetzen. Weiterhin ist das erfindungsgemäße System zusätzlich in der Lage, bei einem in etwa gleichen Aushubvolumen (verglichen mit der Verlegung eines normalen Abwasserkanals) stark vergrößerte Rückhaltevolumina zu schaffen. Weiterhin ist das System durch die Möglichkeit der kaskadierten Anordnung über die gesamte Kanallänge erweiterbar.

Im Folgenden werden Beispiele von bevorzugten Ausführungsformen schematisch anhand von Zeichnungen näher erläutert. Es zeigen:
Figur 1 einen schematischen Schnitt entlang der Linie A-A die in Figur 2 dargestellt ist;
Figur 2 eine schematische Draufsicht auf das Kanalsystem;
Figur 3 einen schematischen Schnitt des Kanalsystems entlang der Linie B-B;
Figur 4 einen schematischen Schnitt des Kanalsystems entlang der Linie C-C und
Figur 5 eine schematische Darstellung des Kanalsystems mit mehreren Kanalhaltungen, die ein Kaskaden-Kanalsystem bilden.

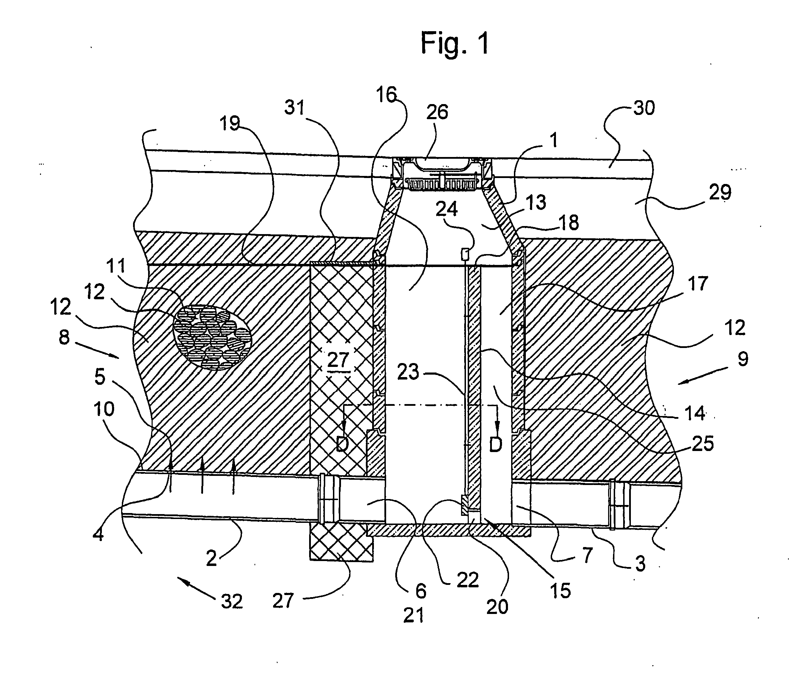

Die Figur 1 zeigt einen Schacht 1, der mit zwei Rohrleitungen 2, 3 verbunden ist. Die Rohrleitungen 2, 3 weisen zumindest in Teilbereichen Öffnungen 4 auf, die ein Austreten von Wasser aus den Rohrleitungen 2, 3 erlauben. Durch die Pfeile 5 ist schematisch ein Austreten von Wasser dargestellt.

Die Rohrleitungen 2, 3 sind mit dem Schacht 1 derart verbunden, dass die stromauf des Schachts 1 liegende Rohrleitung 2 mit einer Einlauföffnung 6 des Schachts 1 verbunden ist und die stromab des Schachts 1 liegende Rohrleitung 3 mit einer Auslauföffnung 7 des Schachts 1 verbunden ist. Stromauf des Schachts 1 ist eine Kanalhaltung 8 vorgesehen. Sofern das Kanalsystem kaskadiert realisiert wird ist weiterhin stromab des Schachts 1 eine Kanalhaltung 9 vorgesehen.

In der Kanalhaltung 8 ist die Rohrleitung 2 vorgesehen, die an einer Mantelfläche 10 die Öffnungen 4 aufweist. Das durch die Öffnungen 4 ausströmende Wasser (durch die Pfeile 5 schematisch dargestellt) kann unter bestimmten Voraussetzungen (wird später noch genauer erläutert) in ein freies Volumen 11 in der Kanalhaltung 8 strömen. In der Kanalhaltung 8 kann sich zudem ein Füllmaterial 12 befinden.

In dem Schacht 1 ist ein Hohlraum 13 vorgesehen, der eine Trennwand 14 aufweist. Die Trennwand 14 kann den Hohlraum 13 in zwei Teilräume 16, 17 teilen. Am unteren Ende der Trennwand 14 kann eine Drossel 15 vorgesehen sein. Die Trennwand 14 weist einen Überlauf 18 auf. Die Staulinie 19 stellt eine Stauhöhe des Wassers dar. In dieser Darstellung entspricht diese Linie der maximalen Stauhöhe.

Die Drossel 15 kann beispielsweise über einen Steckschieber 22 derart eingestellt werden, dass sich eine Drosselöffnung 20 vergrößert oder verkleinert. Die Verstellung der Drossel 15 kann über eine beispielhaft dargestellte Schieberstange 23 mittels eines Handgriffs 24 erfolgen.

Der Teilraum 17 dient als Absturzraum 25, der über die Auslauföffnung 7 mit der Rohrleitung 3 in Verbindung steht.

Der Schacht 1 weist einen Schachtboden 21 auf, weiterhin einen konisch verjüngten oberen Bereich und eine Schachtabdeckung 26. Die Schachtabdeckung 26 kann bei Bedarf abgenommen werden um beispielsweise über den Handgriff 24 die Öffnung 20 der Drossel 15 einzustellen oder den Schacht 1 zu säubern.

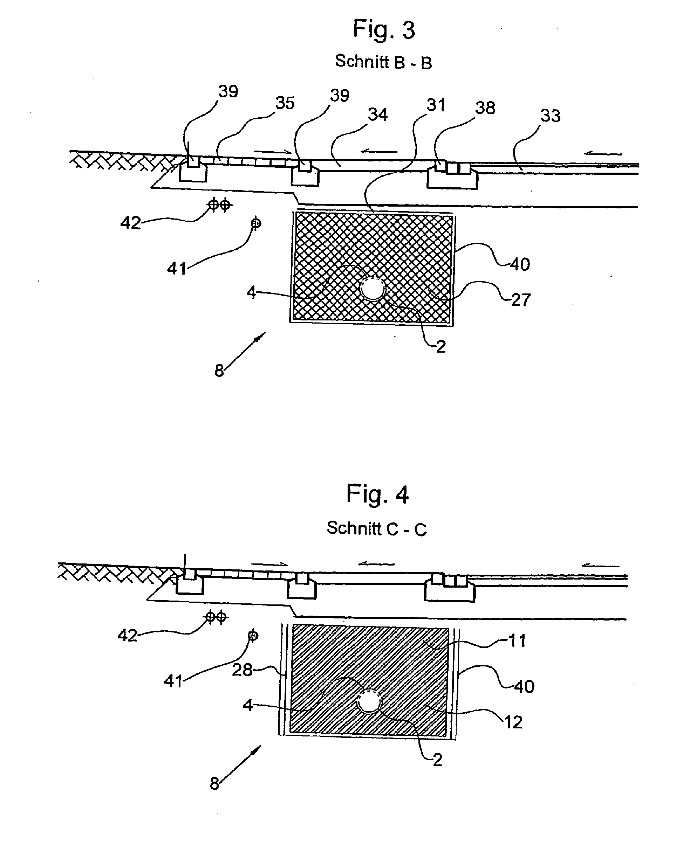

Stromauf des Schachts 1, in der schematischen Schnittdarstellung der Figur 1, ist ein Trennmaterial 27 vorgesehen. Seitlich in der Kanalhaltung 8 ist ein Abdichtmaterial 28 vorgesehen (in der Figur 4 dargestellt). Das Trennmaterial 27 kann mit dem Abdichtmaterial 28 eine fluiddichte Verbindung eingehen.

Weiterhin ist in der Figur 1 eine Schottertragsschicht 30 und eine Frostschutzschicht 29 dargestellt.

Das Füllmaterial 12 kann über das Trennmaterial 27 aufgebracht werden wobei zwischen dem Füllmaterial 12 und dem Trennmaterial 27 eine Vlieslage 31 angeordnet sein kann. Dadurch wird eine Trennung zwischen dem Füllmaterial 12 und dem Trennmaterial 27 erreicht. Das Füllmaterial 12 bedeckt das Trennmaterial 27 und verläuft von der Kanalhaltung 8 über das Trennmaterial 27, zumindest teilweise um den Schacht 1 herum, zur nächsten Kanalhaltung 9. Die Höhe des Füllmaterials 12 in der Kanalhaltung 8 geht über die durch den Überlauf 18 eingestellte maximale Staulinie 19 hinaus. Auch dadurch kann ein Abtrag des darüber liegenden Materials bei einem starken und schnellen Anstieg des Wassers verhindert werden, da das Wasser in dem Füllmaterial 12 bzw. in dessen freiem Volumen 11 gehalten wird und in dem Füllmaterial 12 bzw. dessen Hohlräumen (freies Volumen 11) über das Trennmaterial 27 um den Schacht 1 in die Kanalhaltung 9 strömt. Zudem kommt es durch Reibungskräfte zwischen dem Wasser und dem Füllmaterial 12 zu einem abgebremsten und gedämpften Einlaufen bzw. Füllen des Wassers in die Kanalhaltung 8, so dass die durchschnittliche Fließgeschwindigkeit in dem gesamten Kanalsystem beträchtlich reduziert wird.

Im Folgenden soll nun kurz die Funktionsweise des Kanalsystems erläutert werden. Während einem normalen Oberflächenwassereintrag wird dieses durch die Rohrleitung 2 in die Einlauföffnung 6 des Schachts 1 strömen. Weiter wird das Abwasser ungehindert durch die Drossel 15 zur Auslauföffnung 7 in die Rohrleitung 3 strömen. Sobald jedoch der Volumenstrom des ablaufenden Oberflächenwassers größer als ein vorbestimmter Volumenstrom ist, kann es zu einem Aufstauen des ablaufenden Wassers kommen. Der maximale Volumenstrom des ablaufenden Oberflächenwasser kann beispielsweise durch die Größe der Drosselöffnung 20 eingestellt werden. Sobald der Volumenstrom in der Rohrleitung 2 diesen durch die Drossel 15 eingestellten maximalen Volumenstrom erreicht und darüber hinausgeht, wird sich das Wasser in den Teilraum 16 des Hohlraums 13 anstauen. Schon bei einer relativ geringen Stauhöhe wird es auf Grund des Prinzips der kommunizierenden Röhren zu einer Füllung der Kanalhaltung 8 kommen. Dies erfolgt dadurch, dass das Wasser in diesem Fall durch die Öffnungen 4 (durch Pfeile 5 dargestellt) in das freie Volumen 11 eintritt. Der Wasserstand bzw. die Staulinie 19 wird sich auf Grund des vorgenannten Prinzips sowohl in der Kanalhaltung 8 als auch in dem Teilraum 16 auf eine gleiche Höhe einstellen. Die Füllung in der Kanalhaltung 8 erfolgt somit beginnend von unten.

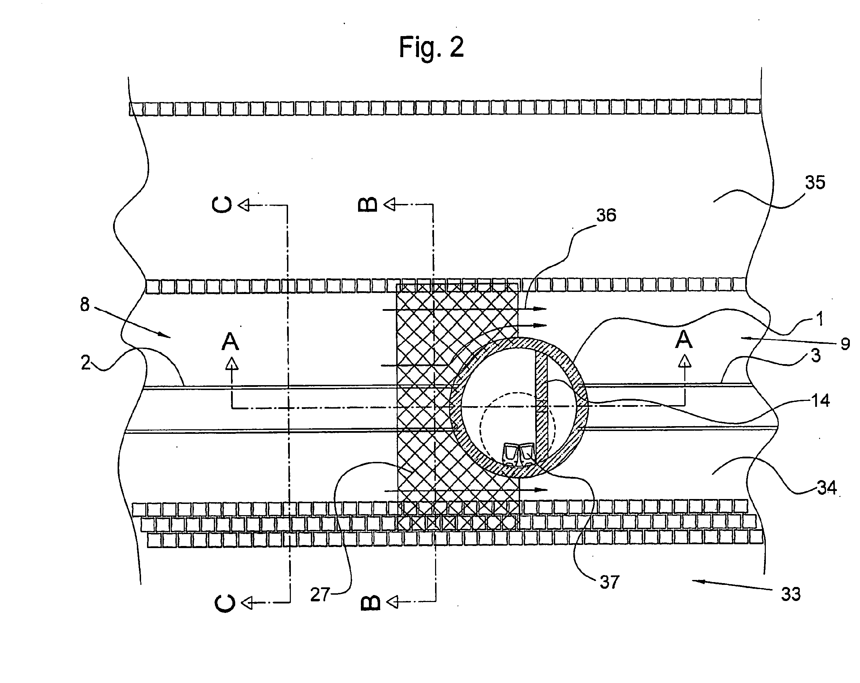

Steigt nun der Wasservolumenstrom noch weiter an, so kann es zu einem weiteren Aufstauen des Wassers in dem Teilraum 16 kommen. Die Staulinie 19 in der Kanalhaltung 8 wird sich immer wieder auf die gleiche Höhe einstellen wie die Staulinie 19 in dem Teilraum 16. Bei Erreichen des Überlaufs 18 befindet sich der Wasserstand in dem Teilraum 16 bei seiner maximalen Stauhöhe. Das aufgestaute Wasser wird dann über den Absturzraum 25 bzw. dem Teilraum 17 in die Rohrleitung 3 abfließen. Da das Trennmaterial 27 ebenso eine Höhe aufweist, die bei einem starken Ansteigen des Wasservolumenstroms ein Überlaufen des Wassers über das Trennmaterial 27 hinweg durch das Füllmaterial 12 hindurch und um die Schachtaußenwände herum (siehe Pfeile 36 in Figur 2) in die nächste Kanalhaltung 9 auf stromabwärtiger Seite erlaubt, kann diese maximale Höhe des Trennmaterials 27 einen weiteren Überlauf darstellen, der als weiterer Sicherheitsüberlauf dient (wie vorstehend schon erwähnt).

Die Höhe des Trennmaterials 27 sollte im Wesentlichen der Höhe der maximalen Staulinie 19 und damit der Höhe des Überlaufs 18 entsprechen.

Folglich kann bei einer erhöhten Oberflächenwassermenge eine sehr große Volumenerweiterung dadurch erzielt werden, dass das gesamte freie Volumen 11 der Kanalhaltung 8, 9 (bis zur Höhe des Überlaufs 18 und/oder der Höhe des Trennmaterials 27) zur Aufnahme des Oberflächenwassers dienen kann. Weiterhin kann dadurch eine starke Verminderung der Fließgeschwindigkeit des Wassers erzielt werden, so dass die Ablaufcharakteristika des Kanalsystems optimal für einen hohen Oberflächenwasservolumenstrom eingestellt sind. Das geschilderte Kanalsystem kann durch eine kaskadierte Anordnung weiter verbessert werden. Stromab des Schachts 1 kann die Kanalhaltung 9 die gleiche Funktion erfüllen, wie vorstehend bezüglich der Kanalhaltung 8 geschildert. Dazu ist stromab des Schachts 1 ein weiterer Schacht 1 vorgesehen, wobei zwischen dem Schacht 1, der stromab des Schachts 1 liegt, welcher in der Figur 1 dargestellt ist eine weitere Kanalhaltung 9 gebildet ist, usw.

Am Boden des Kanalgrabens ist eine Grobschotterschicht 32 ausgebildet, welche mit dem Schachtboden 21 des Schachts 1 in Kontakt stehen kann. Das Trennmaterial 27 kann hierbei bis unterhalb der Rohrleitung 2 vorgesehen sein. Das Trennmaterial 27 kann um die Rohrleitung 2 herum angeordnet sein, um ein sicheres Abdichten gegen das in der Kanalhaltung 8 eventuell stehende Wasser zu gewährleisten.

An dieser Stelle sei ausdrücklich erwähnt, dass die vorstehend erläuterte Funktionsweise natürlich auch für die Kanalhaltung 9 stromab des Schachts 1 und sämtliche weitere Kanalhaltungen (nicht dargestellt) gilt.

In der Figur 2 ist eine schematische Draufsicht auf einen Abschnitt des Kanalsystems dargestellt. Hierbei ist eine Fahrbahn 33, ein Multifunktionsstreifen 34 und ein Gehweg 35 beispielhaft gezeigt. Weiterhin ist das Trennmaterial 27 dargestellt, welches sich unterhalb des Multifunktionsstreifens 34 befindet. In einer richtig dargestellten Draufsicht wäre des Trennmaterial 27 und die Rohrleitungen 2, 3 nicht sichtbar. Weiterhin wäre die Trennwand 14 durch die Schachtabdeckung 26 abgedeckt. Die Lage der schematischen Schnittdarstellung in Figur 2, die das Trennmaterial 27 und den Schacht 1 mit der Trennwand 14 zeigt, ist in der Figur 1 durch die Schnittlinie D-D angedeutet.

Weiterhin ist durch die Pfeile 36 die Strömung von Wasser von der Kanalhaltung 8 zur Kanalhaltung 9 dargestellt, wenn der Füllstand des Wassers in der Kanalhaltung 8 die Höhe des Trennmaterials 27 erreicht hat. Das Wasser kann folglich über das Trennmaterial 27 durch das Füllmaterial 12 bzw. dessen freies Volumen 11 und seitlich an dem Schacht 1 vorbei in die stromabliegende Kanalhaltung 9 abströmen.

Weiterhin können in dem Schacht 1 Steigeisen 37 vorgesehen sein, die einen Einstieg in den Schacht 1 ermöglichen, um beispielsweise die Drossel 15 einzustellen oder um den Schacht zu reinigen.

In der Figur 3 ist ein Schnitt entlang der Linie B-B dargestellt. An der Oberfläche des Kanalsystems kann zwischen der Fahrbahn 33 und dem Multifunktionsstreifen 34 z.B. eine Homburger Kante 38 vorgesehen sein. Zwischen dem Multifunktionsstreifen 34 und dem Gehweg 35 kann z.B. ein Einzeiler 39 vorgesehen sein. Ein solcher Einzeiler 39 kann ebenso zwischen dem Gehweg 35 und den angrenzenden Flächen vorgesehen sein.

Das Trennmaterial 27 ist um die Rohrleitung 2 herum angeordnet. Weiterhin sind die Öffnungen 4 der Rohrleitung 2 dargestellt. Das in der Figur 4 dargestellte Abdichtmaterial 28 und ein Vlies 40 kann sich entlang dem gesamten Kanalsystem von einer Kanalhaltung 8 zur nächsten Kanalhaltung 9 ebenso in dem Bereich erstrecken in dem das Trennmaterial 27 vorgesehen ist. In der Figur 3 ist jedoch nur das Vlies 40 dargestellt. Weiterhin kann es auch möglich sein, dass das Abdichtmaterial 28 nur in einem Teilbereich des Trennmaterials 27 überlappend vorgesehen ist, so dass es zur gewünschten Abdichtfunktion kommen kann. Das Vlies 40 kann um das Trennmaterial 27 herum und überlappend verlegt werden. Die Vlieslage 31 ist oben auf dem Trennmaterial 27 angeordnet.

In der Figur 3 ist zudem schematisch eine Gasleitung 41 dargestellt. Weiterhin ist eine Strom und Telekomleitung mit dem Bezugszeichen 42 angegeben.

In der Figur 4 ist ein Schnitt entlang der Linie C-C von Figur 2 dargestellt.

Hierbei ist das Füllmaterial 12 schematisch in der Kanalhaltung 8 dargestellt. Die Kanalhaltung 8 kann außen von dem Vlies 40 umgeben sein. Das Vlies 40 kann verhindern, dass Feinmaterial vom umgebenden Boden in die Kanalhaltung 8 hineingelangt. Seitlich und relativ zum Vlies 40 innen liegend und längs verlaufend ist das Abdichtmaterial 28 vorgesehen.

Das Füllmaterial 12 ist derart eingefüllt und/oder ausgebildet, dass ein freies Volumen 11 darin gebildet ist. Das freie Volumen 11 kann das sich aufstauende Wasser aufnehmen. Das Füllmaterial 12 kann sich aus Schotter zusammensetzen mit einer Körnung von z.B. 32/64 mm. Um die Rohrleitung 2 herum ist Split, Riesel bzw. sind Kieselsteine mit einer Körnung von z. B. 4/ 10 mm vorgesehen. Die vorgenannten Dimensionen stellen lediglich Beispiele dar. Das Vorsehen von Kieselsteinen bzw. Riesel um die Rohrleitung 2 dient zum Schützen der Rohrleitung 2 gegen eine Beschädigung durch den eventuell scharfkantigen Schotter.

In den Figuren 3 und 4 sind die Öffnungen 4 der Rohrleitung 2 dargestellt. Die Öffnungen 4 können sich hierbei über die gesamte Mantelfläche 10 der Rohrleitung 2 verteilt befinden. Es ist jedoch auch möglich, die Öffnungen 4 nur in Teilbereichen der Mantelfläche 10 vorzusehen, beispielsweise nur im oberen Bereich der Rohrleitung 2. Dadurch wäre ein Versickern von ablaufenden Oberflächenwasser nach unten verhindert, wenn der Volumenstrom des Wassers nur gering ist. Außerdem wäre dadurch eventuell ein Zusetzen der Öffnungen 4 und/oder des freien Volumens 11 durch Schmutz oder ähnliches verhindert.

Sollte jedoch der Volumenstrom so groß sein, dass die Drosselung an der Drossel 15 zu einem Ansteigen des Wasserpegels führt, so füllt sich die dargestellte Kanalhaltung 8 von unten mit Wasser. Dies erfolgt unabhängig von der vorgenannten Verteilung der Öffnungen 4 an der Mantelfläche 10 der Rohrleitung 2.

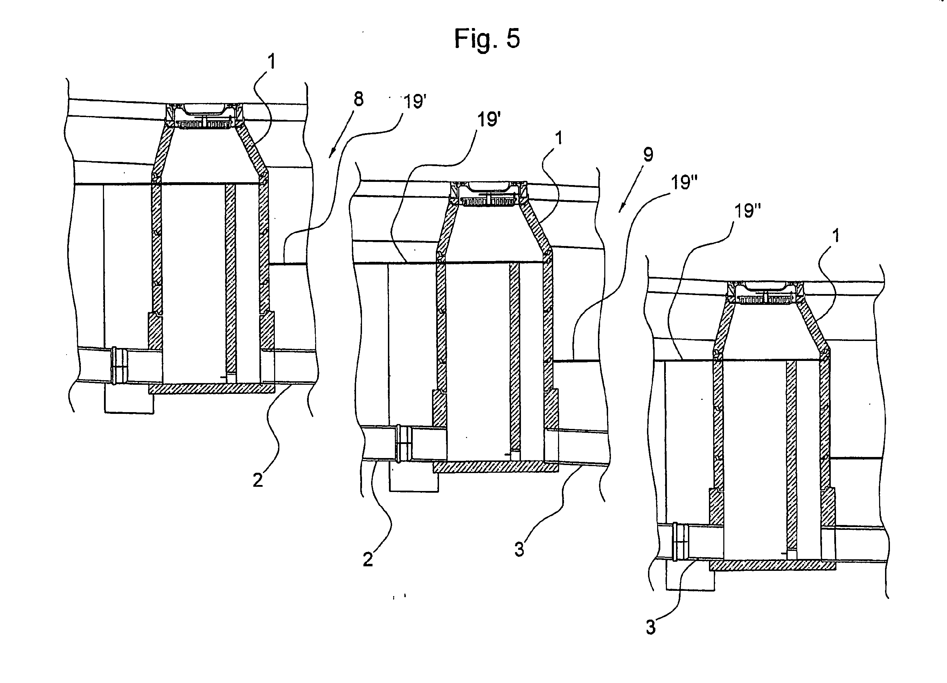

In der Figur 5 ist ein kaskadierter Aufbau des Kanalsystems vereinfacht und schematisch dargestellt. Hierbei befindet sich beispielsweise die Kanalhaltung 8 zwischen dem Schacht 1 auf der linken Seite der Figur 5 und dem Schacht 1 in der Mitte der Figur 5, wobei sich die Kanalhaltung 9 zwischen dem Schacht 1 in der Mitte der Figur 5 und dem Schacht 1 auf der rechten Seite der Figur 5 befindet.

Es ist beispielsweise eine Ablaufneigung der Rohrleitung 2 und damit der Kanalhaltung 8 von 2 % dargestellt, wobei die Ablaufneigung der Rohrleitung 3 und damit der Kanalhaltung 9 mit 5 % dargestellt ist. Dies sind jedoch nur Beispiele. Weitere Beispiele für Dimensionen sind etwa der Durchmesser der Rohrleitungen 2, 3 von 350 mm und eine mögliche Drosselöffnung mit einem Durchmesser von 100 mm. Der Drosseldurchmesser kann durch einen entsprechenden Verstellmechanismus, sofern vorgesehen, eingestellt werden.

Die in der Figur 5 dargestellte Staulinie 19' entspricht dem Wasservolumen in der Kanalhaltung 8 und die Staulinie 19" entspricht dem Wasservolumen in der Kanalhaltung 9.

Das erfindungsgemäße Kanalsystem besteht somit aus einem teiloffenen Rohrsystem welches nahezu den gesamten Leitungsgraben bei entsprechendem Oberflächenwasseranfall mitnutzt. Der vorgesehene modifizierte Schacht 1 kann sich von einem herkömmlichen Schacht durch die Trennwand 14 unterscheiden. Diese Trennwand 14 kann beispielsweise eine Stahlbetonscheibe sein, wobei in dieser Betonscheibe unten im Schachtgerinne eine kreisrunde Öffnung ausgespart sein kann, die als Drossel 15 fungiert. Natürlich ist nicht der relativ minimale Raumgewinn im Schacht bei einem Aufstauen von Wasser entscheidend, sondern die sehr große Volumenerweiterung durch die Austrittsmöglichkeit des Oberflächenwassers in der gesamten Kanalhaltung 8, 9. Dies führt zu der extremen Verringerung der Fließgeschwindigkeit bei großen Niederschlagsintensitäten.

Weiterhin ist die Möglichkeit einer Versickerung eines gewissen Teils des Oberflächenwassers im Untergrund je nach Durchlässigkeit des anstehenden Bodens gegeben. Dadurch kann das erfindungsgemäße Kanalsystem auch zusätzlich wie ein Rigolensystem arbeiten.

Bei dem Einsatz des erfindungsgemäßen Kanalsystems ist zusätzlich zu beachten, dass es zu so genannten Drainage-Effekten über Kanal-Hausanschlusstrassen kommen kann. Diese Drainage-Effekte können dazu führen, dass Wasser eventuell bis zu den Gebäuden gelangen kann und dort ungewollt Schäden verursacht. Dies kann dadurch erfolgen, dass eventuell entsprechende Hausanschlüsse quer durch die Kanalhaltung geführt sind, wobei dann Wasser entlang der Kanalleitung quer aus der Kanalhaltung heraus zu dem entsprechenden Gebäude strömen kann. Hierbei ist es zweckmäßig einen Lehm- oder Tonriegel (Lehmschlag) quer zur Kanaltrasse vorzusehen um ein ungehindertes Ausbreiten des Oberflächenwassers an der Hausanschlusstrasse zu verhindern. Sollte bindiges Bodenmaterial nicht vor Ort sein, so kann auch auf wasserdichtes Folienmaterial zurückgegriffen werden, welches doppellagig verwendet werden kann.

Das Trennmaterial 27 und das Abdichtmaterial 28 können jeweils aus Lehm und/oder aus einer wasserdichten Folie bestehen.

Das Abdichtmaterial 28 kann hierbei über die gesamte Seitenlänge der Kanalhaltung 8, 9 verlegt werden. Es ist jedoch auch denkbar dieses nur in Teilbereichen zu verlegen, nämlich dort wo eine Abdichtung notwendig ist bzw. dort wo kein Versickern des aufgestauten Oberflächenwassers gewünscht wird. Das Abdichtmaterial 28 ist eventuell dort überflüssig wo ein bindiger Boden vorhanden ist.

## Patentansprüche

1. Kanalsystem mit
- zumindest einem Schacht (1), der mit zwei Rohrleitungen (2, 3) in Verbindung steht, wobei die Rohrleitungen (2, 3) zumindest in Teilbereichen Öffnungen (4) an einer Mantelfläche (10) aufweisen, die ein Austreten von Wasser erlauben, wobei die stromauf des Schachts (1) liegende Rohrleitung (2) in einer stromauf vorgesehene Kanalhaltung (8) und die stromab des Schachts (1) liegende Rohrleitung (3) in einer stromab vorgesehenen Kanalhaltung (9) angeordnet sind,
- einer Drossel (15) zum Aufstauen von Wasser, die am oder im Schacht (1) angeordnet ist, und
- einem Überlauf (18), der ein Ablaufen des aufgestauten Wassers ermöglicht und der auf gleicher Höhe oder stromauf der Drossel (15) vorgesehen ist und dessen Ablauf (25) mit der Rohrleitung (3) stromab des zugeordneten Schachts (1) in einer Fluidverbindung steht, wobei
- in der sich stromauf des Schachts (1) befindlichen Kanalhaltung (8) ein im Wesetnlichen wasserundurchlässiges Trennmaterial (27) vorgesehen ist, das im Wesentlichen quer zur Ablaufrichtung bzw. Strömungsrichtung des Wassers angeordnet ist,
**dadurch gekennzeichnet, dass**
das Trennmaterial (27) an der stromaufwärtigen Seite des Schachts (1) um den Schacht (1) herum ausgebildet ist und den Schacht (1) an der Kontaktfläche im Wesentlichen wasserdicht umschließt.

2. Kanalsystem nach Anspruch 1, **dadurch gekennzeichnet, dass**
in dem Schacht (1) ein Hohlraum (13) mit einer Trennwand (14) vorgesehen ist, die den Hohlraum (13) in zwei Teilräume (15, 16) unterteilt.

3. Kanalsystem nach Anspruch 2, **dadurch gekennzeichnet, dass**
die Drossel (15) in dem Schacht (1) am unteren Ende der Trennwand (14) vorgesehen ist.

4. Kanalsystem nach zumindest einem der Ansprüche 1 bis 3, **dadurch gekennzeichnet, dass**
die stromauf des Schachts (1) angeordnete Rohrleitung (2) mit einer Einlauföffnung (6) des Schachts verbunden ist und die stromab des Schachts (1) angeordnete Rohrleitung (3) mit einer Auslauföffnung (7) des Schachts (1) verbunden ist.

5. Kanalsystem nach Anspruch 1, **dadurch gekennzeichnet, dass**
das Trennmaterial (27) im Wesentlichen die Höhe des Überlaufs (18) aufweist.

6. Kanalsystem nach zumindest einem der Ansprüche 1 bis 5, **dadurch gekennzeichnet, dass**
die Kanalhaltung (8, 9) ein in Längsrichtung angeordnetes seitliches Abdichtmaterial (28) aufweist, das im Wesentlichen wasserundurchlässig ist.

7. Kanalsystem nach zumindest einem der Ansprüche 1 bis 6, **dadurch gekennzeichnet, dass**
das Trennmaterial (27) mit dem Abdichtmaterial (28) im Wesentlichen wasserdicht abschließt.

8. Kanalsystem nach zumindest einem der Ansprüche 1 bis 7, **dadurch gekennzeichnet, dass**
das Trennmaterial (27) aus Lehm und/oder aus einem anderen tonhaltigen Material ausgebildet ist.

9. Kanalsystem nach zumindest einem der Ansprüche 6 bis 8, **dadurch gekennzeichnet, dass**
das Abdichtmaterial (28) eine Kunststofffolie ist.

10. Kanalsystem nach zumindest einem der Ansprüche 1 bis 9, **dadurch gekennzeichnet, dass**
die Kanalhaltung (8, 9) an einer Unterseite und an den längsverlaufenden Seitenwänden zur Stabilisierung ein Vlies (40) aufweist.

11. Kanalsystem nach Anspruch 10, **dadurch gekennzeichnet, dass** das Abdichtmaterial (29) innerhalb des Vlieses (40) angeordnet ist.

12. Kanalsystem nach zumindest einem der Ansprüche 1 bis 11, **dadurch gekennzeichnet, dass**
in der Kanalhaltung (8, 9) freies Volumen (11) gebildet ist, das von Wasser einnehmbar ist.

13. Kanalsystem nach zumindest einem der Ansprüche 1 bis 12, **dadurch gekennzeichnet, dass**
in der Kanalhaltung (8, 9) ein Füllmaterial (12) vorgesehen ist, das einen vorbestimmten Hohlraumgehalt aufweist.

14. Kanalsystem nach Anspruch 13, **dadurch gekennzeichnet, dass**
das Füllmaterial (12) Kies, Split und/oder Schotter ist.

15. Kanalsystem nach zumindest einem der Ansprüche 2 bis 14, **dadurch gekennzeichnet, dass**
die Trennwand (14) als Beton- und/oder Stahlscheibe ausgebildet ist.

16. Kanalsystem nach zumindest einem der Ansprüche 2 bis 15, **dadurch gekennzeichnet, dass**
die Trennwand (14) aus mehreren zusammensteckbaren Elementen ausgebildet ist.

17. Kanalsystem nach Anspruch 16, **dadurch gekennzeichnet, dass**
die Elemente als Dammbalken ausgebildet sind.

18. Kanalsystem nach zumindest einem der Ansprüche 1 bis 17, **dadurch gekennzeichnet, dass**
die Drossel (15) eine Drosselöffnung (20) aufweist, die ein Aufstauen von Wasser über einem vorbestimmten Volumenstrom erlaubt.

19. Kanalsystem nach zumindest einem der Ansprüche 1 bis 18, **dadurch gekennzeichnet, dass**
die Drossel (15) als Steckschieber (22) ausgebildet ist.

## Claims

1. Sewer system comprising
- at least a shaft (1), which is in contact with two pipelines (2, 3), wherein the pipelines (2, 3) at least in portions have apertures (4) at a surface shell (10) which allow a leakage of water, wherein the pipeline (2) that is located upstream of the shaft (1) is arranged in a pond (8) which is provided upstream and the pipeline (3) that is located downstream of the shaft (1) is arranged in a pond (9) which is provided downstream,
- a throttle (15) which is arranged at or in the shaft (1) for damming up water, and
- an overflow (18), which allows draining off the dammed water and which is provided at the same level as the throttle (15) or upstream of the throttle (15) and, wherein the outlet (25) of the overflow (18) is in fluid contact with the pipeline (3) downstream of the allocated shaft (1), wherein
- a substantially waterproof separating material (27) is provided in the pond (8), situated upstream of the shaft (1), wherein said separating material (27) is arranged substantially transverse to the direction of drainage or flow of the water, respectively"
**characterized in that**
the separating material (27) is formed around the shaft (1) at the upstream-side of the shaft (1) so as to surround the shaft (1) at the contact area in a substantially waterproof manner.

2. Sewer system according to claim 1, **characterized in that** a cavity (13) in the shaft (1) is provided with a separating wall (14), which divides the cavity (13) into two partial spaces (15, 16).

3. Sewer system according to claim 2, **characterized in that** the throttle (15) is provided in the shaft (1) at the lower end of the separating wall (14).

4. Sewer system according to at least one of claims 1 to 3, **characterized in that** the pipeline (2), provided upstream of the shaft (1), is connected to an inlet aperture (6) of the shaft and the pipeline (3) provided downstream of the shaft (1) is connected to an outlet aperture (7) of the shaft (1).

5. Sewer system according to claim 1, **characterized in that** the separating material (27) has substantially the same level as the overflow (18).

6. Sewer system according to at least one of claims 1 to 5, **characterized in that** the pond (8, 9) has a lateral sealing material (28) arranged in longitudinal direction which is substantially waterproof.

7. Sewer system according to at least one of claims 1 to 6, **characterized in that** the separating material (27) closes with the sealing material (28) in a substantially waterproof manner.

8. Sewer system according to at least one of claims 1 to 7, **characterized in that** the separating material (27) is formed out of loam and/or another material which comprises clay.

9. Sewer system according to at least one of claims 6 to 8, **characterized in that** the sealing material (28) is a plastic foil.

10. Sewer system according to at least one of claims 1 to 9, **characterized in that** the pond (8, 9) comprises a fleece (40) at a lower side and at the longitudinal side walls for stabilization.

11. Sewer system according to claim 10, **characterized in that** the sealing material (29) is arranged inside the fleece (40).

12. Sewer system according to at least one of claims 1 to 11, **characterized in that** an open volume (11), which can receive water, is formed in the pond (8, 9).

13. Sewer system according to at least one of claims 1 to 12, **characterized in that** a filling material (12), which has a predetermined hollow space volume, is provided in the pond (8, 9).

14. Sewer system according to claim 13, **characterized in that** the filling material (12) is gravel, grit chips, and/or crushed stones.

15. Sewer system according to at least one of claims 2 to 14, **characterized in that** the separating wall (14) is formed as a plate of concrete and/or a plate of steel.

16. Sewer system according to at least one of claims 2 to 15, **characterized in that** the separating wall (14) is formed out of a plurality of pluggable elements.

17. Sewer system according to claim 16, **characterized in that** the elements are formed as stop-logs.

18. Sewer system according to at least one of claims 1 to 17, **characterized in that** the throttle (15) has a throttle opening (20) which allows for a damming up water above a predetermined volume flow.

19. Sewer system according to at least one of claims 1 to 18, **characterized in that** the throttle (15) is formed as a plug-slider (22).

## Revendications

1. Système de canalisation comprenant:
- au moins une citerne (1), qui est en communication avec deux conduites tubulaires (2, 3), les conduites tubulaires (2, 3) présentant, au moins dans des sections partielles, des ouvertures (4) sur une surface de la gaine (10) permettant la sortie de l'eau, la conduite tubulaire (2) se trouvant en amont de la citerne (1) étant disposée dans un bief (8) prévu en amont et la conduite tubulaire (3) se trouvant en aval de la citerne (1) étant disposée dans un bief (9) prévu en aval,
- un étranglement (15) pour l'accumulation de l'eau, disposé contre la paroi de la citerne ou dans la citerne (1), et
- un déversoir (18), permettant un écoulement de l'eau accumulée et prévu à la même hauteur ou en amont de l'étranglement (15) et dont l'écoulement (25) est en communication de fluide avec la conduite tubulaire (3) en aval de la citerne associée (1),
- un matériau de séparation (27) sensiblement imperméable à l'eau, qui est disposé sensiblement à la transversale par rapport au sens de l'écoulement ou au sens du courant de l'eau, étant prévu dans le bief (8) se trouvant en amont de la citerne (1),
**caractérisé en ce que**
le matériau de séparation (27) est formé sur la face du côté amont de la citerne (1) autour de la citerne (1) et entoure la citerne (1) de manière sensiblement étanche à l'eau au niveau de la surface de contact.

2. Système de canalisation selon la revendication 1, **caractérisé en ce qu'**un espace creux (13) avec une paroi de séparation (14), qui divise l'espace creux (13) en deux espaces partiels (15, 16), est prévu dans la citerne (1).

3. Système de canalisation selon la revendication 2, **caractérisé en ce que** l'étranglement (15) est prévu dans la citerne (1) à l'extrémité inférieure de la paroi de séparation (14).

4. Système de canalisation selon au moins l'une des revendications 1 à 3, **caractérisé en ce que** la conduite tubulaire (2) disposée en amont de la citerne (1) est reliée à une ouverture d'entrée (6) de la citerne et que la conduite tubulaire (3) disposée en aval de la citerne (1) est reliée à une ouverture de sortie (7) de la citerne (1).

5. Système de canalisation selon la revendication 1, **caractérisé en ce que** le matériau de séparation (27) présente sensiblement la hauteur du déversoir (18).

6. Système de canalisation selon au moins l'une des revendications 1 à 5, **caractérisé en ce que** le bief (8, 9) présente un matériau permettant d'assurer l'étanchéité (28) latéral, disposé dans le sens longitudinal.

7. Système de canalisation selon au moins l'une des revendications 1 à 6, **caractérisé en ce que** le matériau de séparation (27) constitue avec le matériau permettant d'assurer l'étanchéité (28) une fermeture sensiblement étanche à l'eau.

8. Système de canalisation selon au moins l'une des revendications 1 à 7, **caractérisé en ce que** le matériau de séparation (27) est formé de terre glaise et/ou d'une autre matière argileuse.

9. Système de canalisation selon au moins l'une des revendications 6 à 8, **caractérisé en ce que** le matériau permettant d'assurer l'étanchéité (28) est un film plastique.

10. Système de canalisation selon au moins l'une des revendications 1 à 9, **caractérisé en ce que** le bief (8, 9) présente sur une face inférieure et sur les parois latérales longitudinales une matière non tissée (40) pour la stabilisation.

11. Système de canalisation selon la revendication 10, **caractérisé en ce que** le matériau permettant d'assurer l'étanchéité (29) est disposé à l'intérieur de la matière non tissée (40).

12. Système de canalisation selon au moins l'une des revendications 1 à 11, **caractérisé en ce qu'**un volume libre (11), qui peut être pris par les eaux, est formé dans le bief (8, 9).

13. Système de canalisation selon au moins l'une des revendications 1 à 12, **caractérisé en ce qu'**un matériau de charge (12), qui présente une teneur en espaces vides prédéterminée, est prévu dans le bief (8, 9).

14. Système de canalisation selon la revendication 13, **caractérisé en ce que** le matériau de charge (12) est du gravier, des gravillons et/ou du ballast.

15. Système de canalisation selon au moins l'une des revendications 2 à 14, **caractérisé en ce que** la paroi de séparation (14) prend la forme d'un panneau en béton et/ou en acier.

16. Système de canalisation selon au moins l'une des revendications 2 à 15, **caractérisé en ce que** la paroi de séparation (14) est formée de plusieurs éléments pouvant être assemblés.

17. Système de canalisation selon la revendication 16, **caractérisé en ce que** les éléments prennent la forme de poutres d'endiguement.

18. Système de canalisation selon au moins l'une des revendications 1 à 17, **caractérisé en ce que** l'étranglement (15) présente une ouverture d'étranglement (20) qui permet une accumulation de l'eau au-delà d'un débit prédéterminé.

19. Système de canalisation selon au moins l'une des revendications 1 à 18, **caractérisé en ce que** l'étranglement (15) prend la forme d'un coulisseau enfichable (22).
